# EUROPÄISCHE PATENTSCHRIFT

(11) **EP 0 736 316 B1**
(45) Veröffentlichungstag und Bekanntmachung des Hinweises auf die Patenterteilung: **01.07.1998**
(21) Anmeldenummer: 95105060.8
(22) Anmeldetag: 05.04.1995
(51) Int. Cl.: B01D 17/025, B01D 17/032, C02F 1/40, E03F 5/16, A47L 15/24

(54) **Verfahren und Einrichtung zum Abtrennen von fetthaltigen Speiseresten aus diese enthaltenden Spülwässern**
Process and apparatus for separating fatty food-wastes from dishwater containing them
Procédé et dispositif pour séparer des restes de nourriture graisseux d'eaux de rinçage les contenant

(43) Veröffentlichungstag der Anmeldung: 09.10.1996
(73) Patentinhaber: PASSAVANT-WERKE AG, 65322 Aarbergen 7 (DE)
(72) Erfinder: Bachon, Ulrich, D-65582 Diez/Lahn (DE)

(56) Entgegenhaltungen:
- DE-A- 3 441 528
- DE-A- 4 035 130
- DE-A- 4 112 502
- DE-U- 9 209 506
- GB-A- 2 228 751
- US-A- 1 784 943

## Beschreibung

Die Erfindung betrifft ein Verfahren zum Abtrennen von insbesondere fetthaltigen Speiseresten aus diese enthaltenden Spülwässern und eine Einrichtung zur Durchführung dieses Verfahrens.

Die Spülwässer von insbesondere im gewerblichen Bereich eingesetzten Geschirrspülmaschinen müssen nach der neuen DIN 4040 in nach dem Schwerkraft- bzw. Dichteunterschiedsprinzip arbeitenden Abscheidern gereinigt werden.

Darin werden die Leichtstoffe durch Aufschwimmen und die Schwerstoffe durch Absinken abgetrennt und dadurch in dem Abscheider zurückgehalten. In Groß- und Restaurantküchen sind diese Abscheider Sonderbauanlagen, die im Untergeschoß eingebaut sind und regelmäßig von einem Entsorgungsfahrzeug entleert werden müssen. Problematisch wird die Spülwasserbehandlung bei auf Volksfesten und ähnlichen Veranstaltungen und in Imbißbetrieben verwendeten mobilen Geschirrspüleinrichtungen (sog. Geschirrmobile). Hier ist es Vorschrift, daß der Abscheider nach jedem Einsatz, mindestens aber täglich entleert wird, um die anaerobe Zersetzung der organischen Speisereste zu Säuren zu vermeiden.

Es stellt sich die Aufgabe, für diesen Anwendungsfall ein praktikables Abwasser-Reinigungsverfahren und eine zur Durchführung des Verfahren geeignete Einrichtung zu finden, das die hygienisch einwandfreie Beseitigung der Abwasser-Inhaltsstoffe ermöglicht. Diese Aufgabe wird erfindungsgemäß durch folgendes Verfahren gelöst:

Der gesamte Inhalt des als Gefäß ausgebildeten Abscheiders wird in kurzen Zeitabständen, z.B. nach jeder Essenzubereitung, in Betriebspausen der Geschirrspülmaschine in ein Auffanggefäß abgelassen und dort in eine Wasser- und eine Sink- und Schwimmstoffphase getrennt. Die Stoffe werden nacheinander aus dem Auffanggefäß entnommen; die Wasserphase wird vorzugsweise in die Geschirrspülmaschine oder den Abscheider zurückgeleitet oder abgeleitet. Schließlich werden das Auffanggefäß und ggf. auch das Abscheidegefäß in der Geschirrspülmaschine gereinigt.

Die Reinigung in der Geschirrspülmaschine erfolgt vorzugsweise zweistufig: in einer ersten Stufe wird ohne und in einer zweiten Stufe mit Spülmittel gearbeitet. Das dabei anfallende Spülwasser kann aufgefangen und später zum Wiederfüllen des Abscheidegefäßes verwendet werden.

Die Stoffe werden vorzugsweise durch Filterung und/oder Anlagerung von der Wasserphase getrennt. Dies kann z.B. schon während des Ablassens in das Auffanggefäß geschehen, in dem das Filtermedium aufgespannt ist. Auf das Filtermedium gelangen beim Entleeren des Spülwassers zuerst die Sinkstoffe (vor allem Stärke). Nach dem Passieren der Wasserphase in den unteren Abschnitt des Auffanggefäßes folgen die Fettstoffe; die auf dem Filter abgelagerten Sinkstoffe wirken auf die Fettstoffe wie ein Tiefenfilter, der eine besonders gute Abtrennung bewirkt. Als Filtermedium eignet sich das in Küchen verwendete Reinigungspapier oder ein spezielles Vlies, das auf einer Loch- oder Siebplatte ausgebreitet wird. Das Sieb kann als Korbeinsatz ausgebildet sein, der nach der Filterung mit den abgetrennten Stoffen aus dem Auffanggefäß entnommen werden kann. Der Korbeinsatz wird als Teil des Auffanggefäßes anschließend ebenfalls in der Geschirrspülmaschine gesäubert.

Die auf dem Filtermedium abgelagerten Trennstoffe sind so weitgehend wasserfrei, daß sie den zu entsorgenden wiederverwertbaren Speiseresten oder dem Haus/Restmüll beigegeben werden können.

Es kann sich lohnen, Schwimmstoffe und Sinkstoffe getrennt zu gewinnen und separat zu entsorgen. Für diesen Fall wird erfindungsgemäß vorgeschlagen, den Inhalt des Abscheidergefäßes in 3 Phasen abzulassen: zuerst die Sinkstoffphase, dann die Wasserphase und zuletzt die Schwimmstoffphase. Das Ende der jeweiligen Phase kann an einem Schauglas beobachtet werden. Es ist ferner möglich, das Abscheidegefäß wie bei ortsfest eingebauten kombinierten Abscheidern durch eine Überfallwand in eine zuerst durchströmte Sinkstoffkammer und eine danach durchströmte Schwimmstoffkammer zu unterteilen und jede Kammer mit einem eigenen Ablaß zu versehen. In Fortführung dieses Gedankens kann das Auffanggefäß ebenfalls in zwei Abteile mit je einer eigenen Trenneinrichtung in Form eines Filters unterteilt werden, die dann von den Kammern des Abscheidegefäßes beaufschlagt werden.

Bevorzugte Ausführungsbeispiele für die Einrichtung zur Durchführung des erfindungsgemäßen Verfahrens sind in den Abbildungen dargestellt und werden nachfolgend detailliert beschrieben.

Es zeigen:
- Fig. 1 -: einen Vertikalschnitt durch eine erste Ausführungsform,
- Fig. 2 -: einen Horizontalschnitt entlang der Linie II - II nach Fig. 1;
- Fig. 3 -: einen Vertikalschnitt durch ein zweites Ausführungsbeispiel;
- Fig. 4 -: ein drittes Ausführungsbeispiel, ebenfalls im Vertikalschnitt.
- Fig. 5 -: ein viertes Ausführungsbeispiel mit rechteckigem Horizontalquerschnitt.

Die in den Abbildungen gezeigten Trenneinrichtungen sind vorzugsweise integrierter Bestandteil einer Geschirrspülmaschine und werden nur zu Entleerungs- und Reinigungszwecken aus der Maschine entnommen. Die Anschlüsse sind hierzu als schnell lösbare Schlauchkupplungen ausgebildet. Sie können jedoch auch als eigenständige Einrichtung ausgebildet sein, die außerhalb der Geschirrspülmaschine aufgestellt werden.

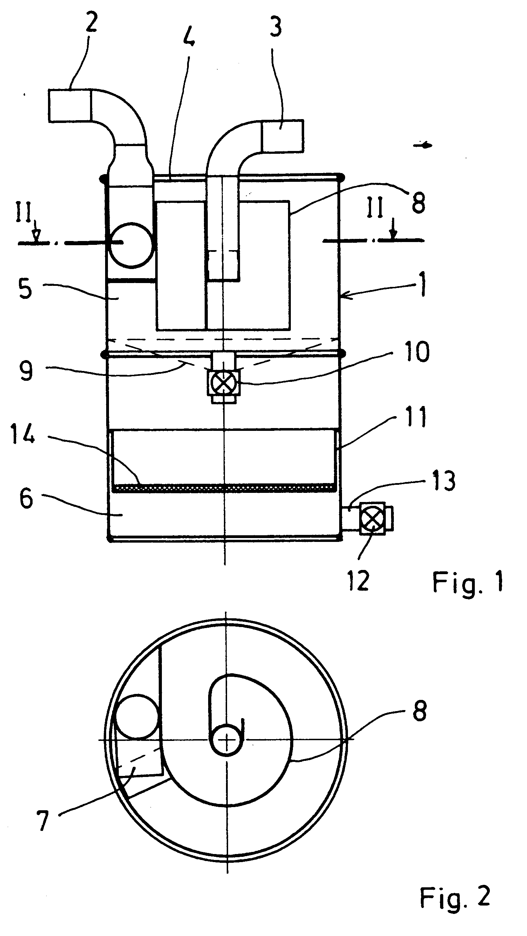

Die Trenneinrichtung nach Fig. 1/2 ist als im horizontalen Querschnitt rundes Gefäß 1 ausgebildet, das aus einem Zu- und Ablaufstutzen 2, 3 enthaltenden Deckel 4, einem Oberteil 5 und einem Auffanggefäß 6 besteht. Die drei Teile sind vorzugsweise durch Spannringe miteinander verbunden, wie sie von Weithalsfässern bekannt sind.

An den nach unten gekrümmten Zulaufstutzen 2 schließt sich eine Umlenkung 7 in die Tangentiale an, die den Abwasserstrom zu einer Spiralströmung zu dem in der Behälterachse liegenden Ablaufstutzen 3 formt. Diese Spiralströmung wird durch eine spiralig verlaufende Leitwand 8 unterstützt, die am Ablaufstutzen befestigt ist.

Der Boden 9 des Oberteils 5 wird von einem Konus gebildet, der in einen Ablauf mit Ventil 10 mündet. In das Auffanggefäß 6 ist ein Siebkorb 11 eingehängt, der mit einem Filtervlies 14 belegt werden kann. Das Auffanggefäß enthält schließlich noch einen durch ein Ventil 12 verschließbaren seitlichen Ablauf 13.

Der Ablaufstutzen kann mittels eines (nicht dargestellten) Geruchverschlusses an die Abwasserleitung angeschlossen werden. Mit dieser Anordnung ist die Grenze zwischen Trinkwasser und Abwasser hinter die Trenneinrichtung verlegt. Die Trenneinrichtung wird damit Bestandteil des Hygienebereichs "Küche" und nicht zu einer Abwasserbehandlungseinrichtung.

Im Betrieb durchläuft das Spülwasser der Geschirrspülmaschine das Trenngefäß. Dabei schwimmen Speisefette zur Oberfläche und sinken schwere Speisereste zum Boden des Oberteils. Nach einer Veranstaltung oder am Ende des Imbißbetriebs wird der Inhalt des Oberteils in das Auffanggefäß 6 abgelassen. Dabei werden zunächst die Sinkstoffe auf dem Filtervlies 14 abgelagert. Nach Passieren der Wasserphase, die anschließend abgelassen wird, breiten sich die Schwimmstoffe auf der Sinkstoffschicht aus, die wie ein Adsorptionsfilter für die Speisefette wirkt. Nun kann das Ventil 10 geschlossen und das Auffanggefäß 6 abgenommen werden. Die im Siebkorb 11 gesammelten Trennstoffe können mit den wiederverwertbaren Speiseresten oder - weil sie weitgehend wasserfrei sind - mit dem Hausmüll entsorgt werden. Diese neue Trenneinrichtung entlastet den nach DIN 4040 vorgeschriebenen Fettabscheider erheblich.

Das im Auffanggefäß 6 unter dem Siebkorb gesammelte Wasser wird in die Geschirrspülmaschine gegossen. Anschließend können alle Teile des Trenngefäßes in die Geschirrspülmaschine gestellt und z.B. in einem Kaltgang gereinigt werden. Die bei diesem Spülgang anfallenden Spülwässer können aufgefangen und nach Wiedereinsetzen des Trenngefäßes zu dessen Befüllung verwendet werden.

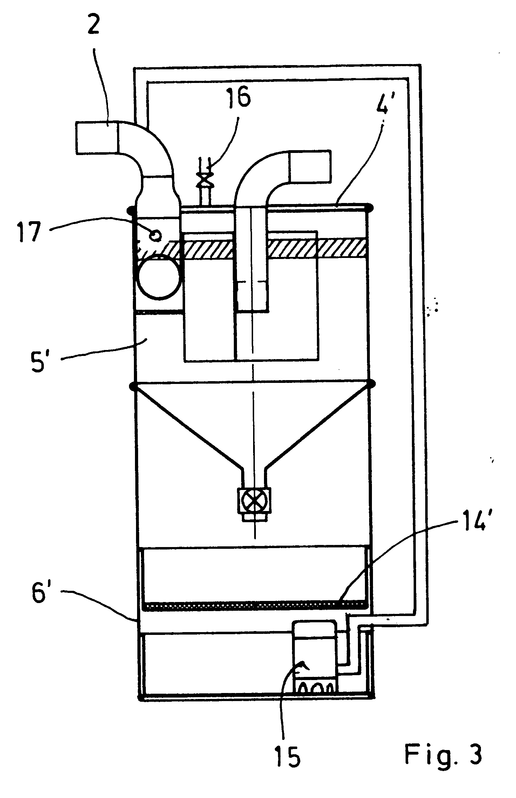

Das Trenngefäß nach Fig. 3 unterscheidet sich von dem vorbeschriebenen vor allem dadurch, daß in das Auffanggefäß 6' eine Pumpe 15 eingesetzt ist, die die durch das Filtervlies 14' geflossene Wasserphase in das Oberteil 5' zurückfördert, nachdem dieses entleert und gereinigt worden ist.

Der zweite Unterschied besteht in der verschließbaren Entlüftungsleitung 16 und in einer Übertrömöffnung 17 zwischen dem oberen Bereich des Gefäßoberteils 5' und dem Zulaufstutzen. Die Entlüftungsleitung ist bei Inbetriebnahme geschlossen, so daß die im Oberteil enthaltene Luft über den Zulaufstutzen entweichen kann. Sobald der Spiegel die Überströmöffnung erreicht und verschlossen hat, steigt der Spiegel nicht mehr weiter an; es bleibt im Gefäß ein Luftpolster bestehen.

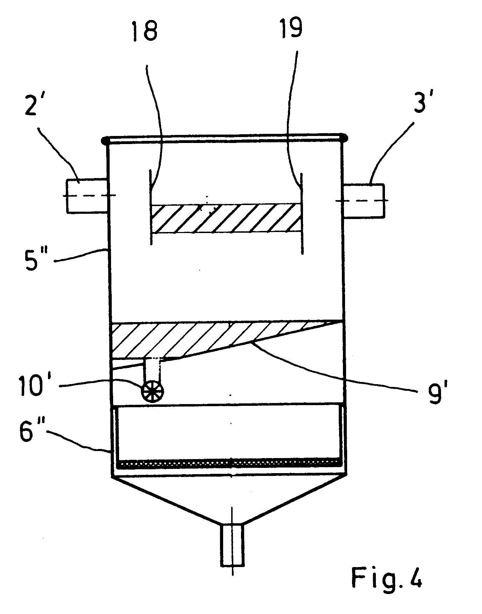

Das Ausführungsbeispiel nach Fig. 4 ist wie ein üblicher Leichtflüssigkeitsabscheider mit unten angesetztem Auffanggefäß 6'' ausgebildet. Dem seitlich angesetzten Zulaufstutzen 2' ist eine Prallfläche 18 vorgeordnet, und der dem Zulauf gegenüberliegende Auslaufstutzen 3' ist durch eine Tauchwand 19 abgeschirmt, die die aufgeschwommenen Speisefette zurückhält. Der Boden 9' des Oberteils ist zu dem seitlichen Ablaß 10' hin abfallend eingebaut.

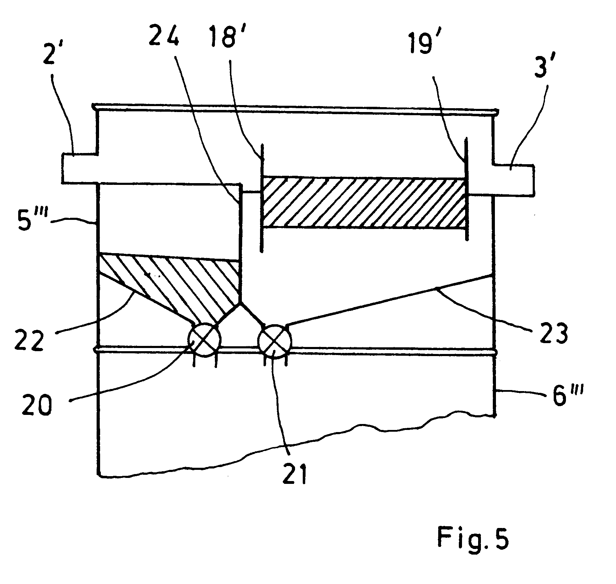

Die letzte Ausführungsform nach Fig. 5 zeigt ein sog. Kombinations-Abscheidegefäß 5''', das in zwei Abscheidekammern unterteilt ist. Die erste Kammer, die der Abtrennung der Sinkstoffe dient, ist von der zweiten Kammer durch eine Überfallwand 24 und eine Prallwand 18' abgetrennt. Dem Reinwasserablauf 3' ist wieder eine Tauchwand 19' vorgeordnet. Zwischen Prallwand und Tauchwand schwimmen die Fettstoffe auf. Der Gefäßboden 22, 23 verläuft geneigt zu zwei unter jeder Kammer angeordneten Ablässen 20, 21. Mit dieser Ausbildung des Abscheidegefäßes werden die Trennstoffe nacheinander in das Auffanggefäß 6''' abgelassen, wobei aus der zweiten Kammer zuerst noch die Wasserphase abgelassen wird.

Das Filtervlies, das die Trennstoffe auffängt, kann aus einem biologisch abbaubaren Stoff hergestellt sein und damit zusammen mit den Trennstoffen entsorgt werden.

## Patentansprüche

1. Verfahren zum Behandeln von in Küchen oder Geschirrspülmaschinen anfallenden, Speisereste enthaltenden Spülwässern in einem nach dem Schwerkraftprinzip arbeitenden Abscheidegefäß, in dem die Leichtstoffe durch Aufschwimmen und Schwerstoffe durch Absinken von der Wasserphase abgetrennt werden, **dadurch gekennzeichnet**, daß der Inhalt des Abscheidegefäßes in einen Auffangbehälter abgelassen und dort in eine Wasser- und die beiden Trennstoffe enthaltenden Feststoffphasen geteilt wird, daß die Feststoffphase entnommen und die Wasserphase zurück- oder abgeleitet wird und daß der Auffangbehälter und ggf. das Abscheidegefäß anschließend in einer Geschirrspülmaschine gesäubert werden.

2. Verfahren nach Anspruch 1, **dadurch gekennzeichnet**, daß Abscheidegefäß und Auffangbehälter integrierter Bestandteil einer Geschirrspülmaschine sind und von deren Steuerung mitbetrieben werden.

3. Verfahren nach Anspruch 1, **dadurch gekennzeichnet**, daß die Trennstoffe in dem Auffangbehälter durch Filterung und/oder Adsorption abgetrennt werden.

4. Verfahren nach Anspruch 3, **dadurch gekennzeichnet**, daß als Filtermaterial das in Küchen vorhandenes Reinigungs- oder Filterpapier verwendet wird.

5. Verfahren nach Anspruch 3, **dadurch gekennzeichnet**, daß als Adsorptionsmedium für die Schwimmstoffe die beim Ablassen zuerst auf das Filtermedium abgegebenen Sinkstoffe verwendet werden.

6. Einrichtung zur Ausübung des Verfahrens nach einem oder mehreren der Ansprüche 1 bis 5, enthaltend ein beruhigt durchströmtes Abscheidegefäß, **dadurch gekennzeichnet**, daß das Abscheidegefäß (5, 5', 5'') mindestens einen unteren absperrbaren Ablaß (10, 10') aufweist und daß an den Ablaß ein Auffangbehälter (6, 6', 6'') mit einer von dem abgelassenen Gefäßinhalt durchströmten Trenneinrichtung (14, 14') angeschlossen ist.

7. Einrichtung nach Anspruch 6, **dadurch gekennzeichnet**, daß Abscheidegefäß (5, 5', 5'') und Auffangbehälter (6, 6',6'') gleichen horizontalen Querschnitt haben und das Abscheidegefäß lösbar auf den Auffangbehälter aufgesetzt ist.

8. Einrichtung nach Anspruch 6 oder 7, **dadurch gekennzeichnet**, daß der Boden (9, 9') des Abscheidegefäßes (5, 5'') konisch ausgebildet oder schräg verlaufend angeordnet ist und daß der Ablaß (10, 10') an der tiefsten Stelle angesetzt ist.

9. Einrichtung nach Anspruch 6, 7 oder 8, **dadurch gekennzeichnet**, daß der Auffangbehälter in einen oberen, die Trenneinrichtung enthaltenden Trennteil und einen unteren Auffangteil unterteilt ist und daß beide Teile leicht lösbar aufeinandergesetzt sind.

10. Einrichtung nach Anspruch 6 bis 9, **dadurch gekennzeichnet**, daß das Abscheidegefäß (5''') durch eine Überfallwand (24) in eine zuerst durchflossene Sinkstoffkammer und eine danach durchflossene Leichtstoffkammer unterteilt ist und daß jede Kammer einen separaten absperrbaren Ablaß (20, 21) aufweist.

11. Einrichtung nach Anspruch 6 bis 10, **dadurch gekennzeichnet**, daß die Trenneinrichtung in dem Auffangbehälter (6, 6', 6'') als grobes Sieb (11) und darübergelegter Filterzuschnitt (14, 14') ausgebildet ist.

12. Einrichtung nach Anspruch 6, **dadurch gekennzeichnet**, daß Abscheidegefäß (5, 5') und Auffangbehälter (6, 6') bzw. dessen Teile durch leicht lösbare Spannringe verbunden sind.

13. Einrichtung nach Anspruch 6, **dadurch gekennzeichnet**, daß das Abscheidegefäß (5) einen abnehmbaren Deckel (4) aufweist, durch den die Zu- und Ablaufleitungen (2, 3) verlaufen.

14. Einrichtung nach Anspruch 13, **dadurch gekennzeichnet**, daß an den Deckel (4') eine verschließbare Entlüftungseinrichtung (16) angesetzt ist.

15. Einrichtung nach Anspruch 13, **dadurch gekennzeichnet**, daß Zu- und Ablaufleitungen (2, 3) mit leicht lösbaren Rohrkupplungen versehen sind.

16. Einrichtung nach Anspruch 6, **dadurch gekennzeichnet**, daß der im oberen Bereich des Abscheidegefäßes (5') verlaufende Zulaufstutzen (2) eine Entlüftungsöffnung (17) in einer dem gewünschten Luftpolster entsprechenden Höhe aufweist.

## Claims

1. Procedure for the treatment of rinsing water containing left-overs from kitchens or dish washing machines or similar equipment, in a separating vessel functioning according to the principle of a gravity separator where the suspended solids are separated from the water by floating to the surface and the settleable solids by settling to the bottom, **characterized in that** the contents of the separating vessel are drained into a collecting basin where they are separated into a liquid and the two solid phases, that the solids are removed and the water is recirculated or drained and that the collecting basin and, if necessary, the separating vessel is cleaned afterwards in a dish washing machine.

2. Procedure according to claim 1, **characterized in that** the separating vessel and the collecting bassin are integral components of a dish washing machine and operated also by its control.

3. Procedure according to claim 1, **characterized in that** the suspended and settleable solids are separated in the collecting basin by filtration and/or adsorption.

4. Procedure according to claim 3, **characterized in that** the used filtration material is simply paper cloth or filter paper usually available in the kitchen.

5. Procedure according to claim 3, **characterized in that** the settleable solids which are accumulating first on the filtration material when the water is drained, are used as adsorbent for the suspended solids.

6. Equipment intended for the application of this procedure according to one or several claims 1 through 5, comprising a separating vessel with a steady flow, **characterized in that** the separating vessel (5, 5', 5'') is provided with at least one lower discharge with stop valve (10, 10') and that a collecting basin (6, 6', 6'') including a filtration device (14, 14'), where the drained liquid passes through, is connected to this discharge.

7. Equipment according to claim 6, **characterized in that** the separating vessel (5, 5', 5'') and the collecting basin (6, 6', 6'') have the same horizontal cross section and that the separating vessel is placed removably onto the collecting basin.

8. Equipment according to claim 6 or 7, **characterized in that** the bottom (9, 9') of the separating vessel (5, 5'') is either formed conically or inclined and that the discharge (10, 10') is located at the lowest point.

9. Equipment according to one of the claims 6, 7 or 8, **characterized in that** the collecting basin is divided into an upper part including the filtration device and a lower receiving part and that both parts are placed removably onto each other.

10. Equipment according to the claims 6 through 9, **characterized in that** the separating vessel (5''') is divided by an overflow wall (24) into a chamber for the settleable solids where the water enters first and a second chamber for the suspended solids, and that each chamber is provided with a separate discharge with stop valve (20, 21).

11. Equipment according to the claims 6 through 10, **characterized in that** the filtration device in the collecting basin (6, 6', 6'') is a coarse sieve (11) onto which the filtration material (14, 14') is placed.

12. Equipment according to claim 6, **characterized in that** the separating vessel (5, 5') and the collecting basin (6, 6') or its components respectively, are connected by easily removable locking rings.

13. Equipment according to claim 6, **characterized in that** the separating vessel (5) is provided with a removable cover (4) where the inlet and discharge pipes (2, 3) are passing through.

14. Equipment according to claim 13, **characterized in that** a ventilation system (16), which can be closed, is attached to the cover (4').

15. Equipment according to claim 13, **characterized in that** the inlet and discharge pipes (2, 3) are provided with easily removable pipe joints.

16. Equipment according to claim 6, **characterized in that** the inlet pipe socket (2) passing through the upper part of the separating vessel (5') is provided with a vent hole (17) which is located at the height corresponding to the desired air cushion.

## Revendications

1. Procédé pour le traitement des eaux de cuisine, p.ex. des laves-vaiselle, etc. comprenant des résidues de nourriture, dans un récipient séparateur fonctionnant selon le principe d'un séparateur à gravité dans lequel les matières légères flottent à la surface et les matières lourdes se déposent auf fond et de cette façon sont séparées de l'eau, **caractérisé en ce que** le contenu du récipient séparateur est vidé dans un récipient collecteur où il est divisé en la phase liquide et les deux phases solides, que les matières retenues sont éliminées et l'eau est recirculée ou évacuée, et que le récipient collecteur et, si nécessaire, le récipient séparateur sont nettoyés dans la lave-vaisselle.

2. Procédé selon revendication 1, **caracterisé en ce que** le récipient séparateur ainsi que le récipient collecteur sont des composants intégraux de la lave-vaisselle et opérés par l'intermédiaire de sa commande.

3. Procédé selon revendication 1, **caractérisé en ce que** les matières légères et lourdes sont séparées dans le récipient collecteur par filtration et/où adsorption.

4. Procédé selon revendication 3, **caractérisé en ce que** le matériel filtrant utilisé est simplement papier essuie-tout ou papier filtre ce qu'on trouve généralement dans la cuisine.

5. Procédé selon revendication 3, **caractérisé en ce que** les matières solides déposées premièrement sur le matérial filtrant lors du vidange de l'eau servent comme adsorbant pour les matières suspendues.

6. Equipement destiné à la mise en service du traitement selon une ou plusieurs revendications 1 à 5, comprenant un récipient séparateur à courant tranquilisé, **caractérisé en ce que** le récipient séparateur (5, 5', 5'') est muni au moins d'une décharge inférieure avec soupape d'arrêt (10, 10') et que la décharge inférieure est connectée à un récipient collecteur (6, 6', 6'') comprenant un dispositif fitrant (14, 14') lequel est traversé par la liquide vidée du récipient séparateur.

7. Equipement selon revendiation 6, **caractérisé en ce que** le récipient séparateur (5, 5', 5'') et le récipient collecteur (6, 6', 6'') ont la même section horizontale et que le récipient séparateur est placé sur le récipient collecteur de façon amovible.

8. Equipement selon revendication 6 ou 7, **caractérisé en ce que** le fond (9, 9') du récipient séparateur (5, 5'') soit est formé coniquement soit est incliné de manière que la décharge (10, 10') se trouve au point plus bas.

9. Equipement selon une des revendications 6, 7 ou 8, **caractérisé en ce que** le récipient collecteur est divisé en la partie supérieure comprenant le dispositif filtrant et la partie inférieure réceptrice et que les deux parties sont posées l'une sur l'autre de manière amovible.

10. Equipement selon les revendications 6 à 9, **caractérisé en ce que** le récipient séparateur (5'') est divisé par une paroi trop-plein (24) en une chambre pour le matières lourdes dans laquelle l'eau entre premièrement et une chambre pour les matières suspendues et que chaque chambre est munie d'une décharge individuelle avec soupape d'arrêt (20, 21).

11. Equipement selon les revendications 6 à 10, **caractérisé en ce que** le dispositif filtrant dans le récipient collecteur (6, 6', 6'') est un classeur (11) sur lequel le matériel filtrant (14, 14') est placé.

12. Equipement selon revendiation 6, **caractérisé en ce que** le récipient séparateur (5, 5') et le récipient collecteur (6, 6') ou bien ses parties composantes sont reliés par des anneaux tendeurs lesquels sont amovibles facilement.

13. Equipement selon revendiation 6, **caractérisé en ce que** le récipient séparateur (5) est muni d'un couvercle (4) amovible, lequel est traversé par les tuyaux d'alimentation d'eau et de décharge (2, 3).

14. Equipement selon revendiation 13, **caractérisé en ce que** le couvercle (4') est pourvu d'un système de ventilation (16) lequel peut être fermé.

15. Equipement selon revendiation 6, **caractérisé en ce que** les tuyaux d'alimentation d'eau et de décharge (2, 3) sont munis des raccords de tuyaux amovibles facilement.

16. Equipement selon revendiation 6, **caractérisé en ce que** la tubulure d'alimentation d'eau (2) traversant la partie supérieure du récipient séparateur (5') est pourvue d'une bouche d'aérage (17) laquelle se trouve à la hauteur correspondant au tampon pneumatique désiré.
